# EUROPÄISCHE PATENTSCHRIFT

(11) **EP 0 419 883 B1**
(45) Veröffentlichungstag und Bekanntmachung des Hinweises auf die Patenterteilung: **10.02.1993**
(21) Anmeldenummer: 90116720.5
(22) Anmeldetag: 31.08.1990
(51) Int. Cl.: B62D 25/20, E05D 1/04

(54) **Steckscharnier für einen abnehmbaren Ladebodendeckel in Kraftfahrzeugen**
Hinge for removable cover in a loading floor in motor vehicles
Charnière pour un couvercle amovible dans une plate-forme de chargement aux véhicules à moteur

(30) Priorität: 27.09.1989 DE 3932128
(43) Veröffentlichungstag der Anmeldung: 03.04.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR); Ford Motor Company, Dearborn Michigan 48126 (US)
(72) Erfinder: Mahr, Josef, D-5000 Köln 91 (DE)
(74) Vertreter: Messulam, Alec Moses

(56) Entgegenhaltungen:
- EP-A- 0 006 274
- DE-B- 2 730 913

## Beschreibung

Die Erfindung bezieht sich auf ein Steckscharnier für einen abnehmbaren Ladebodendeckel in Kraftfahrzeugen, der im Oberbegriff des Patentanspruches erläuterten Art.

Aus der DE-C-27 41 540 ist bereits ein Steckscharnier für einen abnehmbaren Ladebodendeckel in Kraftfahrzeugen, der im Oberbegriff des Patentanspruches erläuterten Art bekannt.

Bei diesem aus Holz bestehenden Ladeboden weist ein Befestigungsteil eine nach unten ragende federnde Zunge auf, die mit einer Öffnung in einer senkrechten Wandung im Karosserieaufnahmerahmen scharnierartig zusammenwirkt.

Zur Vermeidung von Klappergeräuschen muß dieser Ladebodendeckel an seinen umlaufenden Stirnkanten mit einer herumgeführten Teppichbodenauflage versehen sein, mit der er auf einer horizontalen Schulter im Aufnahmerahmen aufliegt und die aus Blech gebildete Federlasche muß mit einem Gummischlauch versehen sein.

Das bekannte Steckscharnier für einen abnehmbaren Ladebodendeckel in Kraftfahrzeugen weist den Nachteil auf, daß es nur in Verbindung mit einem Ladebodendeckel aus Holz mit entsprechend teurer Teppichverkleidung anwendbar ist, wodurch die Herstellung eines solchen Ladebodendeckels durch die erforderliche Handarbeit unverhältnismäßig teuer wird.

Bei aus Blech gebildeten Ladebodendeckeln in Kraftfahrzeugen werden bisher einfache Scharnierbänder verwendet, die am Ladebodendeckel und am Karosserieaufnahmerahmen durch Schrauben befestigt werden.

Diese einfachere Befestigungsart weist jedoch den Nachteil auf, daß das manchmal erwünschte Abnehmen des Ladebodendeckels nur mit Werkzeugeinsatz möglich wird.

Bei aus Blech gebildeten Ladebodendeckeln werden oft auch die Scharnierbänder durch Punktschweißen befestigt, wodurch ein Abnehmen des Ladebodendeckels gar nicht möglich ist.

Die Aufgabe der Erfindung ist es, ein Steckscharnier für einen abnehmbaren Ladebodendeckel in Kraftfahrzeugen zu schaffen, der in einfacher Weise aus Blech bestehen kann und nicht notwendigerweise eine Teppichverkleidung aufweisen muß und der durch Ein- und Ausrasten des Steckscharniers in einfacher Weise montierbar und demontierbar ist.

Gemäß der Erfindung wird diese Aufgabe gelöste indem ein Steckscharnier für einen abnehmbaren Ladebodendeckel in Kraftfahrzeugen, der im Oberbegriff des Patentanspruches erläuterten Art die im Kennzeichenteil des Patentanspruches aufgezeigten Merkmale aufweist.

Dadurch, daß das Steckscharnier als ein Kunststoff-Formteil mit einer mittleren, oberen Zunge und zwei seitlichen unteren Zungen ausgebildet ist, die mit einer oberen Öffnung in einer horizontalen Wandung und mit einer unteren Öffnung in einer senkrechten Wandung einer Kante des Karosserieaufnahmerahmens scharnierartig zusammenwirken und an den unteren Zungen Abstütznocken vorgesehen sind, die auf der horizontalen Schulter im Karosserieaufnahmerahmen aufliegen, wird ein in der Herstellung einfaches Steckscharnier geschaffen, mit dem die Montage und Demontage eines Ladebodendeckels in einem Kraftfahrzeug wesentlich vereinfacht wird und in geschlossener Lage des Ladebodendeckels dessen klapperfreie Abstützung sichergestellt wird.

Der Ladebodendeckel wird hierbei an seinem freien Ende an entsprechenden Auflagen am Karosserieaufnahmerahmen abgestützt und über Knebelverschlüsse verspannt.

Aus der EP-A 0 013 338 ist zwar bereits ein Steckscharnier bekannt, das als Kunststoff-Formteil ausgebildet ist, dieses wirkt jedoch nicht mit Öffnungen in einem Karosserieaufnahmerahmen zusammen und weist nicht solche tragenden Abstütznocken auf. Darüber hinaus ist ein solches Steckscharnier lediglich für eine ohnehin aus Kunststoffmaterial bestehende Haube eines Datenverarbeitungsterminals vorgeschlagen.

Die Erfindung wird anhand eines in den beiliegenden Zeichnungen gezeigten Ausführungsbeispieles näher erläutert. Es zeigt:

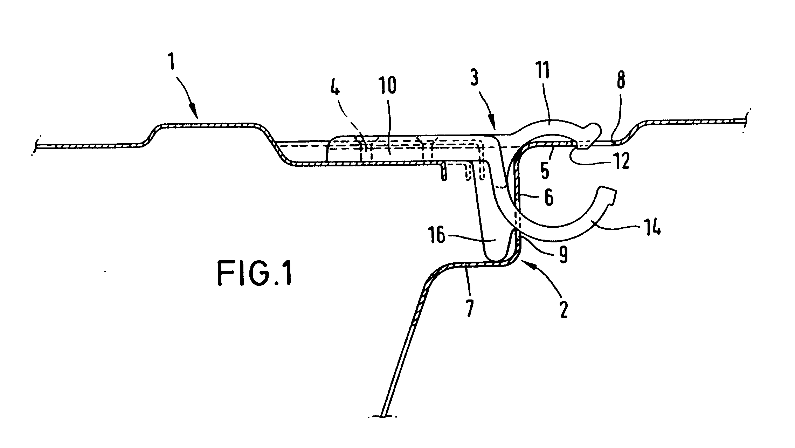

Fig. 1 Einen vertikalen Schnitt durch einen aus Blech bestehenden Ladebodendeckel im Kantenbereich seine Karosserieaufnahmerahmens mit dem erfindungsgemäßen Steckscharnier angelenkt und abgestützt;

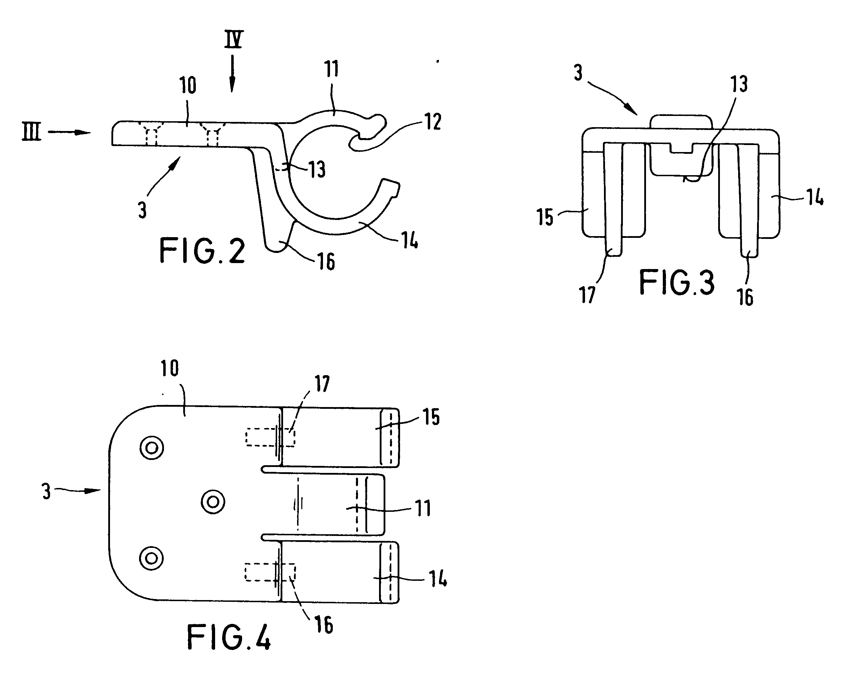

Fig. 2 eine Seitenansicht des erfindungsgemäßen Steckscharniers;
Fig. 3 eine Ansicht des Steckscharniers in Richtung des Pfeiles III in Fig. 2 und
Fig. 4 eine Ansicht des Steckscharniers in Richtung des Pfeiles IV in Fig. 2.

Ein Ladebodendeckel 1, der als Blechpreßteil ausgebildet ist, ist in den durch Teile der Bodengruppe des Kraftfahrzeuges gebildeten Kantenbereich eines Karosserieaufnaherahmen 2 angeordnet. Ein Steckscharnier 3 ist als Kunststoff-Formteil ausgebildet und am Ladebodendeckel 1 in einfacher Weise durch Schrauben 4 befestigt. Der Kantenbereich der Karosserieaufnahmerahmen 2 weist eine obere Absenkung 5, eine vertikale Wandung 6 und eine untere horizontale Schulter 7 auf. In der oberen Absenkung 5 ist eine obere Öffnung 8 und in der senkrechten Wandung 6 ist eine untere Öffnung 9 gestanzt.

Das Steckscharnier 3 besteht aus einer Befestigungsplatte 10, einer mittleren oberen Zunge 11 mit einer inneren Rastnase 12 und einem unteren Vorsprung 13 und zwei seitlichen unteren Zungen 14 und 15 mit daran angeformten Abstütznocken 16 und 17.

Die mittlere obere Zunge 11 und die seitlichen unteren Zungen 14 und 15 liegen auf einem Zylinderumfang, der die Schwenkachse des Ladebodendeckels definiert. Die Abrundung zwischen der oberen Absenkung 5 und der vertikalen Wandung 6 im Kantenbereich des Karosserieaufnahmerahmen 2 bildet hierbei das Gegenlager für den von den Zungen gebildeten Scharnierzylinder.

Die Abstütznocken 16 und 17 an den unteren Zungen 14 und 15 des Steckscharniers 3 werden hierbei in ihrer Höhe so ausgelegt, daß es zu einem Verspannen der unteren Zungen 14 und 15 in ihrer Öffnung 9 in der vertikalen Wandung 6 kommt, wodurch einerseits eine sichere Abstützung des Ladebodendeckels 1 erzielt wird und andererseits durch die Verspannung Klappergeräusche vermieden werden.

Die Rastnase 12 an der oberen Zunge 11 verhindert ein übermäßiges horizontales Wandern des Steckscharniers 3 nach hinten, ermöglicht jedoch bei etwa um 20 bis 30 Grad nach oben angehobenen Ladebodendeckel durch einen etwas stärkeren Zug ein einfaches Ausrasten des Steckscharniers 3 aus den Öffnungen 8 und 9 im Kantenbereich des Karrosserieaufnahmerahmen. In umgekehrter Richtung kann der Ladebodendeckel durch einfaches Einrasten in den Öffnungen im Karosserieaufnahmerahmen montiert werden.

Der Ladebodendeckel wird hierbei an seinem freien Ende an entsprechenden Auflagen am Karosserieaufnahmerahmen abgestützt und über Knebelverschlüsse verspannt.

## Patentansprüche

1. Steckscharnier für einen abnehmbaren Ladebodendeckel (1) in Kraftfahrzeugen, mit mindestens einer am Ladebodendeckel festgelegten Befestigungsplatte (10) mit einer nach unten ragenden federnden Zunge (14), die mit einer Öffnung (9) in einer senkrechten Wandung (6) eines Karosserieaufnahmerahmens (2) scharnierartig zusammenwirkt und wobei sich der Ladebodendeckel (1) auf einer horizontalen Schulter (7) im Karosserieaufnahmerahmen (2) abstützt,
**dadurch gekennzeichnet**, daß
das Steckscharnier (3) als ein Kunstoff-Formteil mit einer mittleren, oberen Zunge (11) mit einer inneren Rastnase (12) und einem unteren Vorsprung (13) und zwei seitlichen unteren Zungen (14 und 15) ausgebildet ist, die mit einer oberen Öffnung (8) in einer horizontalen Wandug (5) und mit einer unteren Öffnung (9) in einer senkrechten Wandung (6) eines Kantenbereichs Karosserieaufnahmerahmens (2) scharnierartig zusammenwirken und an den unteren Zungen (14 und 15) angeformte Abstütznocken (16 und 17) vorgesehen sind, die auf einer horizontalen Schulter (7) im Karroserieaufnahmerahmen (2) aufliegen.

## Claims

1. A snap-on hinge for a removable load platform in motor vehicles, with a fixing plate which is fixed on the load platform and has a downwardly projecting resilient tongue which co-operates in the manner of a hinge with an opening in a vertical wall of a receiving frame of a vehicle body and wherein the load platform is supported on a horizontal shoulder in the receiving frame of the vehicle body, characterised in that the snap-on hinge (3) is constructed as a plastics moulding with a central upper tongue (11) with an internal engaging nose (12) and a lower projection (13) and two lateral lower tongues (14 and 15), which co-operate with an upper opening (8) in a horizontal wall (5) and with a lower opening (9) in a vertical wall (6) of the receiving frame (2) of the vehicle body and supporting cams (16 and 17) which are moulded on the lower tongues (14 and 15) and rest on a horizontal shoulder (7) in the receiving frame (2) of the vehicle body are provided.

## Revendications

1. Charnière à enfichage pour un couvercle amovible (1) d'un dispositif de chargement ménagé dans le plancher de véhicules automobiles, comprenant au moins une plaque de fixation (10) attachée au couvercle et possédant une languette élastique (14) dirigée vers le bas et coopérant à la façon d'une charnière avec une ouverture (9) pratiquée dans une paroi verticale (6) d'un encadrement récepteur (2) d'une carrosserie, le couvercle (1) du dispositif de chargement s'appuyant sur un épaulement horizontal (7) dans l'encadrement récepteur (2) de la carrosserie,
caractérisée en ce que
la charnière à enfichage (3) est réalisée comme une pièce moulée en matière plastique, comprenant une languette supérieure centrale (11) possédant un renflement de retenue (12) à l'intérieur et une saillie (13) en bas, ainsi que deux languettes inférieures latérales (14 et 15), qui coopèrent à la façon d'une charnière avec, respectivement, une ouverture supérieure (8) pratiquée dans une paroi horizontale (5) et une ouverture inférieure (9) pratiquée dans une paroi verticale (6) d'une zone de bord de l'encadrement récepteur (2) de la carrosserie, et que des ergots d'appui (16 et 17) sont formés sur les languettes inférieures (14 et 15) et reposent sur un épaulement horizontal (7) dans l'encadrement récepteur (2) de la carrosserie.
